# EUROPÄISCHE PATENTSCHRIFT

(11) **EP 3 698 052 B1**
(45) Veröffentlichungstag und Bekanntmachung des Hinweises auf die Patenterteilung: **12.01.2022**
(21) Anmeldenummer: 18807849.7
(22) Anmeldetag: 18.10.2018
(51) Int. Cl.: F15B 11/15, F15B 11/048, F15B 15/22, F15B 15/14

(54) **HYDRAULIKEINHEIT FÜR EINEN DREHPFLUG**
HYDRAULIC UNIT FOR A REVERSIBLE PLOUGH
UNITÉ HYDRAULIQUE POUR UNE CHARRUE RÉVERSIBLE

(30) Priorität: 20.10.2017 DE 202017005489 U
(43) Veröffentlichungstag der Anmeldung: 26.08.2020
(73) Patentinhaber: Bümach Engineering International B.V., 7826 TA Emmen (NL)
(72) Erfinder: BUETER, Josef, 49733 Haren/Altenberge (DE)
(74) Vertreter: Weihrauch, Frank
(86) Internationale Anmeldenummer: PCT/DE2018/000299
(87) Internationale Veröffentlichungsnummer: WO 2019/076394

(56) Entgegenhaltungen:
- DE-A1- 4 243 343
- DE-A1- 19 952 881
- US-A- 2 917 029

## Beschreibung

Die Erfindung betrifft eine Hydraulikeinheit für einen Drehpflug, mittels welcher eine hydraulische Steuerung für einen Drehpflug durchführbar ist.

Die Verwendung eines Drehpfluges ermöglicht das Pflügen in beiden Fahrtrichtungen, so dass keine ungenutzte Rückfahrt besteht. Nach der Kehrtwende am Ende eines Feldes kann ein Pflügen bei der Rückfahrt in der zuletzt gezogenen Furche erfolgen. Bekannt sind insbesondere VolIdrehpflüge, welche eine Schwenkeinheit mit rechts- und linksdrehenden Scharen aufweisen, die sich senkrecht gegenüberstehen und durch eine Drehung von 180 Grad in ihre Arbeitsstellung gebracht werden. Der Pflug weist somit zwei Endlagen auf.

Die Drehung des Pfluges kann insbesondere unter Verwendung eines doppelt wirkenden Arbeitszylinders erfolgen, der mit einer Schwenkmechanik gekoppelt ist. Zur Umstellung von links auf rechts oder umgekehrt wird eine erste Drehabschnittsbewegung des Pflugs beispielsweise durch ein Einfahren des Zylinders bewirkt, bis ein Totpunkt erreicht wird. Nach Überschreitung des Totpunktes durch die kinetische Energie der Schwenkeinheit erfolgt dann ein aktives Wiederausfahren des Zylinders zur Bewirkung der zweiten Drehabschnittbewegung, so dass sich der Pflug bis in seine andere Arbeitslage bewegt. Der Wendepunkt des Zylinders entspricht somit dem Wendepunkt des Pfluges.

Zur Realisierung der zwei Bewegungsabschnitte bedarf es einer Umschaltung der Bewegungsrichtung des doppelt wirkenden Arbeitszylinders von einem Einfahrbetriebszustand in einen Ausfahrbetriebszustand. Aus dem Stand der Technik sind bereits verschiedene Lösungsansätze für hydraulische Steuerungen eines Drehpfluges bekannt.

Die Druckschrift EP 1 757 179 A1 beschreibt eine hydraulische Steuerung für einen Drehpflug. Hierbei wird die selbstständige Umschaltung der Bewegungsrichtung beim Erreichen der jeweiligen Endlage durch ein in einer Zuleitung von einem Hochdruckanschluss und einer Rücklaufleitung zu einem Rücklaufanschluss angeordneten Umsteuer-Wegeventil mit einem zwischen einer Ruhestellung und einer Umschaltstellung verstellbaren Steuerkolben vorgenommen, der beim Erreichen der Totpunktlage den Druck in der Zuleitung steigen lässt und den Druck in der Rücklaufleitung senkt. Durch unterschiedliche Wirkflächen des Steuerkolbens im Ventil in Verbindung mit einer Druckfeder wird die Umsteuerung bewirkt, die die druckführende Leitung in den jeweils anderen Kolbenraum leitet. Als ein wesentlicher Nachteil der hier beschriebenen Steuerung ist jedoch anzuführen, dass die Umsteuerung in der Totpunktlage ruckartig erfolgt.

Zudem offenbart auch die Druckschrift EP 0 067 286 A1 eine gattungsgemäße Steuervorrichtung für das Verschwenken eines Drehpfluges um seine Drehachse. Nachteilig an dieser Steuerung ist jedoch insbesondere, dass infolge auftretender Druckspitzen ein ungewolltes Umschalten eintreten kann, wodurch die Schwenkbewegung eingeleitet wird, ohne dass die Endlage des Hubes erreicht ist.

Eine weitere Steuervorrichtung für das Verschwenken eines Drehpfluges ist aus der Druckschrift DE 42 43 343 A1 bekannt. Mittels der hier beschriebenen Steuerung wird der Steuervorgang in einer erzwungenen Abfolge eingeleitet, die zwar unabhängig von den Druckbedingungen ist, aber dennoch den Betriebsdruck des Systems in der Totpunktlage einsetzt, um die Umkehrbewegung einzuleiten. Zwar ist der den Umschaltvorgang einleitende Druck geringer als der Betriebsdruck des Systems, aber diese Druckdifferenz wird über zusätzliche hydraulische Ventiltechnik erzielt.

Ferner beschreibt US 2 917 029 A1 eine Steuerung eines doppeltwirkenden Arbeitszylinders. Hierbei wird während der Arbeitsbewegung ein Steuerungsfluidstrom auch den nicht aktiv druckbeaufschlagten Arbeitsraum des Arbeitszylinders hindurchgeleitet. Gelangt der Kolben in die Endlage, wird der Druckmitteldurchstrom verschlossen. Durch den dadurch bewirkten Druckanstieg in einer Steurungsfluidleitung wird ein Umschaltvorgang ausgelöst.

Es ist festzustellen, dass die aus dem Stand der Technik bekannten Steuervorrichtungen eine ungedämpfte Umschaltung des Arbeitszylinders durchführen und somit unerwünschte dynamische Belastungen für die Schwenkmechanik verursachen, welche die Lebensdauer nachteilig beeinflussen.

Die Aufgabe der Erfindung ist es daher, eine Hydraulikeinheit für einen Drehpflug aufzuzeigen, welche eine selbsttätige Umschaltung in der Totpunktlage ermöglicht, welche eine hohe Betriebssicherheit gewährleistet, einen geringen Wartungsaufwand erfordert und eine hohe Lebensdauer des Drehpfluges ermöglicht sowie zudem kostengünstig bereitstellbar ist.

Die Aufgabe wird durch die im Patentanspruch 1 aufgeführten Merkmale gelöst.

Eine bevorzugte Weiterbildung ergibt sich aus dem Unteranspruch.

Eine erfindungsgemäße Hydraulikeinheit für einen Drehpflug weist als Grundbestandteile einen Arbeitszylinder sowie eine hydraulische Steuerungseinheit auf.

Der Arbeitszylinder ist erfindungsgemäß als doppeltwirkender Zylinder ausgestaltet, so dass dieser aktiv ein- und ausfahrbar ist. Der Arbeitszylinder weist einen Kolben, eine Kolbenstange sowie ein Zylinderrohr auf und ist durch den Kolben in einen ersten und zweiten Arbeitsraum unterteilt.

Ferner weist der Kolben eine radial umlaufende Dichtung sowie einen Kolbenring mit einem Kolbenringspalt auf. Der Kolbenring ist von der Dichtung axial beabstandet angeordnet.

Des Weiteren weist der Arbeitszylinder in einem ersten axialen Endbereich einen ersten Hauptanschluss und in einem zweiten axialen Endbereich einen zweiten Hauptanschluss sowie einen Steueranschluss auf.

Der zweite Hauptanschluss ist gegenüber dem Steueranschluss in Richtung des Kolbens axial versetzt angeordnet, so dass der zweite Hauptanschluss innerhalb des zweiten axialen Endbereichs den innenliegenden Anschluss bildet und der Steueranschluss den außenliegenden Anschluss bildet. Über die beiden Hauptanschlüsse ist ein Fluid als hydraulisches Arbeitsmedium in die beiden Arbeitsräume einleitbar, wobei der erste Hauptanschluss dem ersten Arbeitsraum und der zweite Hauptanschluss dem zweiten Arbeitsraum zugeordnet ist.

Bei einem Überfahren des zweiten Hauptanschlusses durch den Kolbenring wird der freie Abstrom des Fluids aus dem zweiten Arbeitsraum in den zweiten Ha uptanschluss versperrt, so dass ein Teilvolumen des Fluids innerhalb des zweite n Arbeitsraums eingeschlossen wird. Das eingeschlossene Teilvolumen ist dann ausschließlich über den Kolbenringspalt gedrosselt in den Bereich zwischen Kolbenring und radial umlaufender Dichtung und von dort in den zweiten Hauptanschluss abströmbar. Auf diese Weise wird eine Endlagendämpfung in dem zweiten Endbereich bereitgestellt.

Die pro Zeiteinheit gedrosselt abströmende Fluidmenge und damit das Dämpfungsmaß kann über die Breite des Kolbenringspalts eingestellt werden.

Vorzugsweise weist das Zylinderrohr in dem Bereich nach dem zweiten Hauptanschluss eine Koniziät auf, so dass der Kolbenring mit fortgesetzter Bewegung des Kolbens in Richtung zweiter Endlage fortschreitend zusammengedrückt wird und sich die Breite des Kolbenringspalts zunehmend verringert. Damit wird eine progressive Endlagendämpfung erreicht.

Die hydraulische Steuerungseinheit steuert das Ein- und Ausleiten der Fluidströme in die beiden Arbeitsräume und damit die Kolbenbewegungen. Sie weist ein hydraulisch betätigtes Steuerventil sowie ein hydraulisch betätigtes Umschaltventil auf. Weitere Bestandteile der hydraulischen Steuerungseinheit sind eine Druckstromzuleitung, eine Fluidrückleitung, eine erste und zweite Hauptleitung sowie eine Steuerleitung.

Von dem Steuerventil ist eine passive oder eine aktive Schaltstellung einnehmbar. Erfindungsgemäß weist das Steuerventil ein Federelement auf, welches in der passiven Schaltstellung entspannt ist und in der aktiven Schaltstellung gespannt ist. Zudem weist das Steuerventil einen Betätigungsanschluss und einen Gegenbetätigungsanschluss auf, wobei bei einer gleichen Druckbeaufschlagung an dem Betätigungs- und Gegenbetätigungsanschluss die passive Schaltstellung eingenommen wird und bei einer Druckbeaufschlagung mit einem höheren Druck an dem Betätigungsanschluss die aktive Schaltstellung eingenommen wird.

Betätigungs- und Gegenbetätigungsanschluss wirken wie nachfolgend besch rieben zusammen: Das Steuerventil weist in an sich bekannter Weise einen axial beweglichen Ventilschieber auf, dessen axiale Lage die passive und die aktive Schaltstellung bestimmt. Der Ventilschieber weist gegenüberliegende Stirnflächen auf, die wie Kolbenflächen wirken und auf der einen Seite durch den Betätigungsanschluss und auf der anderen Seite durch den Gegenbetätigungsanschluss mit einem Fluiddruck beaufschlagt werden. Wird beispielsweise die gegenbetätigungsseitige Stirnfläche etwas größer gewählt als die betätigungsseitige Stirnfläche, wird bei gleichem Druck das Steuerventil zuverlässig in der passiven Schaltfläche gehalten. Ferner wirkt das Federelement auf den Ventilschieber und beaufschlagt eine Kraft in Richtung der passiven Schaltstellung.

Die zum Bewirken der aktiven oder passiven Schaltstellung konkret erforderliche höhere Druckbeaufschlagung an dem Betätigungsanschluss ist durch die Eigenschaften des Federelements sowie durch eine Variation des Größenverhältnisses der hydraulisch wirksamen Stirnflächen des Ventilschiebers des Steuerventils an dem Betätigungs- und Gegenbetätigungsanschluss einstellbar.

Von dem Umschaltventil ist ebenfalls eine aktive oder eine passive Schaltstellung einnehmbar. Zudem weist das Umschaltventil ein Federelement auf, welches in der passiven Schaltstellung entspannt und in der aktiven Schaltstellung gespannt ist. Das Umschaltventil weist in an sich bekannter Weise einen Steuerschieber auf. Das Federelement wirkt auf diesen Steuerschieber und beaufschlagt eine Kraft in Richtung der passiven Schaltstellung. Das Umschaltventil weist einen Verriegelungsanschluss, einen Schaltanschluss sowie insgesamt sechs Arbeitsanschlüsse auf. Bei einer Druckbeaufschlagung am Schaltanschluss wird die aktive Schaltstellung eingenommen. Erfindungsgemäß ist die aktive Schaltstellung mittels eines hydraulisch betätigten Verriegelungselements fixierbar. Das Verriegelungselement ist dem Verriegelungsanschluss zugeordnet und ist mittels einer Druckbeaufschlagung des Verriegelungsanschlusses betätigbar. Vorzugsweise ist das Verriegelungselement als ein Raststößel ausgebildet, welcher ein Federelement enthält, das bei einer Druckbeaufschlagung gespannt wird und ein Einrasten des Raststößels in den Steuerschieber des Umschaltventils ermöglicht. Somit kann das Umschaltventil nach einem Wechsel der Schaltstellung von passiv auf aktiv auch noch dann in der aktiven Schaltstellung gehalten werden, wenn keine Druckbeaufschlagung an dem Umschaltanschluss vorliegt. Die passive Schaltstellung wird daher ausschließlich dann angenommen, wenn der Schaltanschluss drucklos ist und wenn zudem das Verriegelungselement nicht fixiert ist.

Die Druckstromzuleitung der erfindungsgemäßen Hydraulikeinheit ist mit einem ersten Arbeitsanschluss des Umschaltventils verbunden und ist an eine Druckstromquelle anschließbar.

Die Fluidrückleitung ist mit einem zweiten Arbeitsanschluss des Umschaltventils verbunden und mündet vorzugsweise in einen Tank, in dem das Fluid aufgenommen wird. Die Druckstromquelle sowie der Tank sind nicht Bestandteil der erfindungsgemäßen Hydraulikeinheit.

Die erste Hauptleitung verbindet den ersten Hauptanschluss des Arbeitszylinders mit einem dritten und sechsten Arbeitsanschluss des Umschaltventils.

Die zweite Hauptleitung verbindet den zweiten Hauptanschluss des Arbeitszylinders mit einem vierten und fünften Arbeitsanschluss des Umschaltventils sowie dem Gegenbetätigungsanschluss des Steuerventils. Der Gegenbetätigungsanschluss des Steuerventils ist damit mit dem an der zweiten Hauptleitung anliegenden Druck beaufschlagbar.

Die Steuerleitung stellt eine schaltbare Verbindung zwischen dem Steueranschluss des Arbeitszylinders und dem Schaltanschluss des Umschaltventils bereit. Hierzu ist mittels der Steuerleitung der Steueranschluss des Arbeitszylinders mit dem Betätigungsanschluss des Steuerventils sowie zugleich über die Arbeitsanschlüsse des Steuerventils mit dem Schaltanschluss des Umschaltventils verbunden. Der Abschnitt der Steuerleitung zwischen dem Steuerventil und dem Schaltanschluss des Umschaltventils ist bei der aktiven Schaltstellung des Steuerventils geöffnet und bei der passiven Schaltstellung geschlossen. Durch die Verbindung mit dem Betätigungsanschluss des Steuerventils wird mittels der Steuerleitung zudem auch die Schaltung des Steuerventils bewirkt.

Die Funktionsweise der erfindungsgemäßen Hydraulikeinheit ergibt sich somit wie folgt:
Bei einer Druckbeaufschlagung in der Druckstromzuleitung ist ein Fluidstrom über das in der passiven Schaltstellung befindliche Umschaltventil, die erste Hauptleitung und den ersten Hauptanschluss in den ersten Arbeitsraum des Arbeitszylinders einleitbar. Der Kolben bewegt sich daher in Richtung des zweiten axialen Endbereichs. Zugleich ist bei einer so bewirkten Kolbenbewegung ein Fluidabstrom aus dem zweiten Arbeitsraum über den zweiten Hauptanschluss, die zweite Hauptleitung, das Umschaltventil und die Fluidrückleitung ausleitbar.

Bei einem Überfahren des zweiten Hauptanschlusses von dem Kolbenring wird ein Teilvolumen des Fluids in dem zweiten Arbeitsraum eingeschlossen und dessen Abstrom über den zweiten Hauptanschluss gedrosselt. Dies bewirkt zum ersten eine Endlagendämpfung und zum zweiten einen Überdruck an dem Steueranschluss im Vergleich zu dem Druck am zweiten Hauptanschluss. Der vorhandene Überdruck ist mittels der Steuerleitung an das Steuerventil übertragbar. Das Steuerventil wird infolge der erhöhten Druckbeaufschlagung an dem Betätigungsanschluss in die aktive Schaltstellung versetzt. Dabei wird das im Steuerventil vorhandene Federelement gespannt, welches zuvor in einem entspannten Zustand die passive Schaltstellung des Steuerventils bewirkte.

Über das in der aktiven Schaltstellung befindliche Steuerventil ist nun die Steuerleitung bis hin zum dem Schaltanschluss des Umschaltventils geöffnet. Der Schaltanschluss ist mit einem Druck beaufschlagt, so dass von dem Umschaltventil eine aktive Schaltstellung eingenommen wird. Hierbei wird das Federelement des Umschaltventils gespannt.

Mit dem Wechsel von der passiven in die aktive Schaltstellung des Umschaltventils ist die Umschaltung bewirkt.

In der aktiven Schaltstellung ist ein Fluidstrom aus der Druckstromzuleitung über das Umschaltventil nun über die zweite Hauptleitung in den zweiten Arbeitsraum leitbar. Zugleich ist ein Fluidabstrom aus dem ersten Arbeitsraum über die erste Hauptleitung und das Umschaltventil in die Fluidrückleitung einleitbar.

Somit wird eine Bewegungsumkehr der aus Kolben und Kolbenstange bestehenden Kolbeneinheit bereitsgestellt. Mit der Bewegungsumkehr der Kolbeneinheit ist die erste Drehabschnittsbewegung der Schwenkeinheit des Drehpfluges abgeschlossen und der Übergang in eine zweite Drehabschnittsbewegung der Schwenkeinheit des Drehpfluges bewirkt. Aufgrund der Endlagendämpfung wird hierbei ein gleichmäßiger Bewegungsablauf bei der Drehung des Drehpfluges ermöglicht.

Der Kolben bewegt sich daraufhin in Richtung des ersten axialen Endbereichs. Der Steueranschluss ist nun mit dem zweiten Hauptanschluss über den zweiten Arbeitsraum druckverbunden. Damit sind die Drücke an dem Betätigungs- und Gegenbetätigungsanschluss des Steuerventils wieder gleich. Daher geht das Steuerventil mittels seines Federelements wieder In die passive Schaltstellung. In der passiven Schaltstellung ist der weiterführende Abschnitt der Steuerleitung bis zum dem Schaltanschluss des Umschaltsventils geschlossen, so dass die Druckbeaufschlagung an dem Schaltanschluss des Umschaltventils entfällt. Die aktive Schaltstellung des Umschaltventils wird nun erfindungsgemäß dennoch beibehalten, da das Verriegelungselement eine Fixierung dieser Schaltstellung bereitstellt.

Erst nach einem Wegfall des Fluiddrucks in der Druckstromzuleitung wird auch der Verriegelungsanschluss drucklos, so dass die Verriegelungseinheit die aktive Schaltstellung des Umschaltventils nicht mehr fixiert. Das Umschaltventil nimmt, bewirkt durch das Federelement, wieder die passive Schaltstellung ein. Die Hydraulikeinheit geht damit in ihre Ausgangslage zurück.

Mit dem Wechsel von der aktiven in die passive Schaltstellung des Umschaltventils ist die Rückumschaltung bewirkt.

Durch eine erneute Druckbeaufschlagung der Druckstromzuleitung ist die beschriebene Bewegungsabfolge der Kolbeneinheit des Arbeitszylinder, mit welcher eine erneute Drehung des Drehpfluges bewirkt werden kann, wiederholt durchführbar.

Es sind somit drei verschiedene Betriebszustände von der hydraulischen Steuerungseinheit einnehmbar.

Während der Bewegung des Kolbens in Richtung des zweiten axialen Endbereichs und vor dem Überfahren des zweiten Hauptanschlusses nimmt die hydraulische Steuerungseinheit einen ersten Betriebszustand an. Dieser ist dadurch gekennzeichnet, dass sich sowohl das Steuerventil als auch das Umschaltventil in der passiven Schaltstellung befinden. Folglich wird Fluid in den ersten Arbeitsraum eingeleitet und aus dem zweiten Arbeitsraum ausgeleitet.

Nach dem Überfahren des zweiten Hauptanschlusses von dem Kolbenring nimmt die hydraulische Steuerungseinheit einen zweiten Betriebszustand an. In diesem wechselt das Steuerventil aufgrund der erhöhten Druckbeaufschlagung an dem Steueranschluss auf die aktive Schaltstellung, so dass der Schaltanschluss des Umschaltventils mit Druck beaufschlagt wird. Der zweite Betriebszustand dauert nur für die kurze Phase an, bis der Kolben seine Endlage erreicht hat, weil damit die erhöhte Druckbeaufschlagung am Schaltanschluss endet und das Schaltventil wieder in seine passive Schaltstellung durch das Federelement zurückgestellt wird.

Die hydraulische Steuerungseinheit nimmt daraufhin einen dritten Betriebszustand an, wobei das Umschaltventil in die aktive Schaltstellung übergeht. Da nun Fluid in den zweiten Arbeitsraum eingeleitet und aus dem ersten Arbeitsraum ausgeleitet wird, bewegt sich der Kolben in Richtung des ersten axialen Endbereichs. Das Steuerventil wechselt wieder in die passive Schaltstellung, da der Überdruck an dem Betätigungsanschluss entfällt und an dem Gegenbetätigungsanschluss der gleiche Druck anliegt.

Nach dem Wegfall des Fluiddruck in der Druckstromzuleitung geht die hydraulische Steuerungseinheit erneut in ihren Ausgangsbetriebszustand über, welcher hinsichtlich der Schaltstellungen des Steuer- und Umschaltventils dem ersten Betriebszustand entspricht.

Die Bereitstellung eines Fluiddruckstroms und dessen Zu- oder Abschaltung erfolgt durch Einrichtungen außerhalb der erfindungsgemäßen Hydraulikeinheit, beispielsweise durch die Hydraulikanlage eines Traktors.

Als von dem Schutzumfang umfasst wird es auch angesehen, wenn beispielsweise durch eine innere hydraulische Verschaltung das Umschaltventil nur vier Arbeitsanschlüsse aufweist, von denen jeweils zwei in einer passiven Schaltstellung direkt verbunden und in einer aktiven Schaltstellung über Kreuz verbunden sind. Es ist lediglich entscheidend, dass in einer passiven Schaltstellung die Druckstromzuleitung mit der ersten Hauptleitung sowie die zweite Hauptleitung mit der Fluidrückleitung, sowie in einer aktiven Schaltstellung die Druckstromzuleitung mit der zweiten Hauptleitung sowie die erste Hauptleitung mit der Fluidrückleitung verbunden ist.

Die erfindungsgemäße Hydraulikeinheit für einen Drehpflug zeichnet sich insbesondere durch die nachfolgenden Vorteile aus.

Ein Vorteil besteht darin, dass mittels der erfindungsgemäßen Hydraulikeinheit die Steuerung der Bewegungen des Arbeitszylinders selbsttätig erfolgt und ohne zusätzliche aktive Mittel wie zusätzliche hydraulisch bereitgestellte Steuerbefehle, elektronische Steuerungseinheiten oder Positionserfassungsmittel ermöglicht wird. Es wird lediglich der für die Betätigung der Bewegung des Drehpfluges ohnehin benötigte Fluiddruckstrom verwandt.

Als weiterer Vorteil wird erfindungsgemäß zugleich eine Endlagendämpfung in dem zweiten axialen Endbereich erzielt, welche für einen gleichmäßigen Bewegungsablauf der Kolbeneinheit wichtig ist. Somit können unerwünschte dynamische Belastungen sowohl der Hydraulikeinheit als auch eines betriebenen Drehpfluges insgesamt verhindert werden.

Vorteilhaft ist die besondere Betriebssicherheit. Die zuverlässige Umschaltung ist insbesondere darauf zurückzuführen, dass neben den Hauptanschlüssen ein Steueranschluss vorhanden ist, so dass aufgrund von verschiedenen Druckverhältnissen in der Steuer- und Hauptleitung zuverlässig eine Änderung der Schaltstellung des Steuerventils und nachfolgend des Umschaltventils bewirkbar ist.

Ein besonderer Vorteil ist es, dass der Druck zum Steuern der Ventile aus dem Fluidabstrom verwandt wird. Damit liegen wesentlich geringere Drücke vor als diese beispielsweise in der Druckstromzuleitung anliegen, so dass alle Schaltvorgänge weicher, also mit geringerer Belastung für alle einbezogenen Bauelemente, insbesondere für die Ventile und die Hydraulikleitungen ablaufen. Es treten geringere dynamische Belastungen auf.

Es ist ferner ein Vorteil, dass die Hydraulikeinheit selbsttätig die Bewegung des Kolbens nach dem Durchlaufen einer Ausfahrt, Umkehr und Einfahrt in der Ausgangslage wieder anhält, solange die Druckstromleitung mit einem Fluiddruckstrom beaufschlagt bleibt. Vorteilhaft ist es zudem, dass die Bewegung des Kolbens mit Beginn einer Beaufschlagung mit einem Fluiddruckstrom selbsttätig anläuft und dann selbsttätig bis zum erneuen Erreichen der Ausgangslage mit einer Ausfahrt, Umkehr und Einfahrt weiterläuft.

Ein weiterer Vorteil ist es, dass die für die Änderung der Schaltstellung des Steuerventils erforderliche Druckbeaufschlagung konstruktiv einfach durch die Auswahl des Federelements festlegbar ist. Dabei können verschiedene Parameter wie die Federkonstante, Form und Größe für die Wahl eines Federlements herangezogen werden. Neben dem vorhandenen Federelement ist zudem das Flächenverhältnis der Stirnflächen des Betätigungs- und Gegenbetätigungsanschlusses des Steuerventils hinsichtlich der für einen Wechsel der Schaltstellung erforderlichen Druckverhältnisse entscheidend. Das Steuerventil ist somit auf verschiedene Arten an die Einsatzerfordernisse anpassbar.

Des Weiteren ist es von Vorteil, dass der Einfluss der temperaturabhängigen Viskosität des Fluids in den Endbereichen vorliegend reduziert werden kann.

Gemäß einer vorteilhaften Weiterbildung weist der Kolben einen weiteren Kolbenring mit einem weiteren Kolbenringspalt auf. Der weitere Kolbenring ist von der Dichtung axial in Richtung des ersten Arbeitsraums beabstandet angeordnet. Damit sind gemäß dieser Weiterbildung an dem Kolben beidseits der Dichtung Kolbenringe jeweils mit Kolbenringspalt angeordnet.

Bei einem Überfahren des ersten Hauptanschlusses (12) wird von dem weiteren Kolbenring in dem ersten Arbeitsraum ein weiteres Teilvolumen des Fluids eingeschlossen, welches über den weiteren Kolbenringspalt gedrosselt abströmbar ist. Damit weist gemäß der Weiterbildung der Arbeitszylinder auch in dem ersten Endbereich und somit in beiden Endbereichen eine Endlagendämpfung auf.

Als Vorteil wird eine Dämpfung bewirkt, wenn nach dem Durchlaufen eines Bewegungszyklus des Kolbens mit einer Ausfahrt, Umkehr und Einfahrt die Ausgangslage wieder eingenommen wird.

Damit wird als Vorteil eine zusätzliche Reduzierung der dynamischen Belastungen erreicht. Zudem ist dies mit geringem konstruktiven Aufwand realisierbar.

Die Erfindung wird als Ausführungsbeispiel anhand von
Fig. 1 Hydraulikschaltplan der erfindungsgemäßen Hydraulikeinheit für einen Drehpflug in einem ersten Schaltzustand,
Fig. 2 Hydraulikschaltplan der erfindungsgemäßen Hydraulikeinheit für einen Drehpflug in einem zweiten Schaltzustand,
Fig. 3 Hydraulikschaltplan der erfindungsgemäßen Hydraulikeinheit für einen Drehpflug in einem dritten Schaltzustand, näher erläutert.

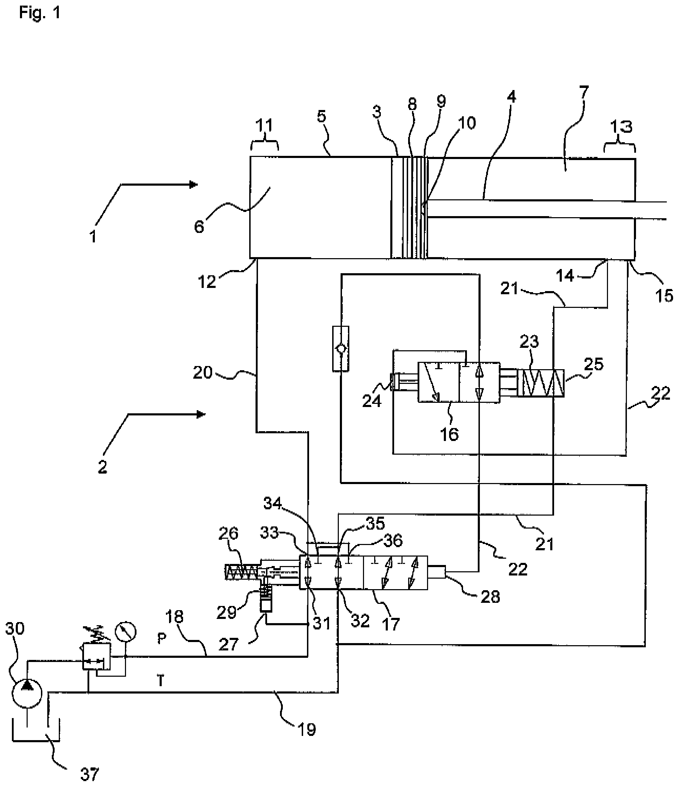

Die in den Fig. 1 bis 3 dargestellte Hydraulikeinheit umfasst einen Arbeitszylinder 1 sowie eine hydraulische Steuerungseinheit 2.

Der Arbeitszylinder 1 weist einen Kolben 3, eine Kolbenstange 4 sowie ein Zylinderrohr 5 auf und ist in einen ersten und einen zweiten Arbeitsraum 6 und 7 unterteilt. Vorliegend ist der Arbeitszylinder 1 als doppeltwirkender Arbeitszylinder ausgebildet, so dass der Kolben 3 von beiden Seiten mit einem hydraulischen Fluid beaufschlagbar ist und der Arbeitszylinder 1 somit aktiv ein- und ausfahrbar ist.

Der Kolben 3 weist eine radial umlaufende Dichtung 8 sowie einen Kolbenring 9 auf, welcher von der Dichtung 8 axial beabstandet ist. Der Kolbenring 9 weist vorliegend einen Kolbenringspalt 10 auf.

Erfindungsgemäß weist der Arbeitszylinder 1 in einem ersten axialen Endbereich 11 einen ersten Hauptanschluss 12 und in einem zweiten axialen Endbereich 13 einen zweiten Hauptanschluss 14 sowie einen Steueranschluss 15 auf. Über die beiden Hauptanschlüsse 12, 14 ist ein Fluid, bei welchem es sich vorzugsweise um Hydrauliköl handelt, in die Arbeitsräume 6, 7 ein- und ausleitbar.

Bei der axialen Bewegung des Kolbens 3 in Richtung des zweiten axialen Endbereichs ist der zweite Hauptanschluss 14 von dem Kolbenring 9 überfahrbar. Wenn der Kolbenring 9 den zweiten Hauptanschluss 14 überfährt, wird in dem zweiten Arbeitsraum 7 ein Teilvolumen des Fluides eingeschlossen, welches über den Kolbenringspalt 10 nur gedrosselt abströmen kann. In dem zweiten axialen Endbereich liegt daher eine Endlagendämpfung vor, so dass der Kolben 3 nach der Überfahrt des zweiten Hauptanschlusses 14 bei einer weiteren Annäherung an seine zweite Endlage abgebremst wird.

Die hydraulische Steuerungseinheit 2 weist ein hydraulisch betätigtes Steuerventil 16 sowie ein hydraulisch betätigtes Umschaltventil 17 auf. Weiterhin umfasst die hydraulische Steuerungseinheit eine Druckstromzuleitung 18, eine 19, eine erste und zweite Hauptleitung 20, 21 sowie eine Steuerleitung 22.

Das Steuerventil 16 kann eine aktive oder eine passive Schaltstellung einnehmen. Es weist ein Federelement 23 auf, welches in der passiven Schaltstellung entspannt und in der aktiven Schaltstellung gespannt ist. Das Steuerventil 16 weist zudem einen Betätigungsanschluss 24 und einen Gegenbetätigungsanschluss 25 auf. Die Stirnflächen des Ventilschiebers auf der Seite des Betätigungsanschlusses 24 und des Gegenbetätigungsanschlusses 25 sind im Zusammenwirken mit dem Federelement 23 so dimensioniert, dass bei einer gleichen Druckbeaufschlagung an dem Betätigungsanschluss 24 und dem Gegenbetätigungsanschluss 25 das Steuerventil 16 die passive Schaltstellung einnimmt, während bei einer Druckbeaufschlagung mit einem höheren Druck an dem Betätigungsanschluss 24 die aktive Schaltstellung eingenommen wird.

Eine Einstellung der zur Annahme der aktiven oder passiven Schaltstellung benötigten Druckverhältnisse kann über die Auswahl des Federlements 23 sowie über das Größenverhältnis der Stirnflächen des Betätigungs- und Gegenbetätigungsanschlusses 24, 25 des Steuerventils 16 erfolgen.

Das Umschaltventil 17 weist einen Verriegelungsanschluss 27 sowie einen Schaltanschluss 28 auf und kann ebenfalls eine aktive oder eine passive Schaltstellung einnehmen. Zudem weist das Umschaltventil 17 ein Federelement 26 auf, das in der passiven Schaltstellung entspannt und in der aktiven Schaltstellung gespannt ist. Durch eine Druckbeaufschlagung des Schaltanschlusses 28 nimmt das Umschaltventil 17 seine aktive Schaltstellung ein. Des Weiteren weist das Umschaltventil 17 ein Verriegelungselement 29 auf, welches dem Verriegelungsanschl uss 27 baulich zugeordnet ist und welches mittels einer Druckbeaufschlagung des Verriegelungsanschlusses 27 betätigt wird. Mittels des Verriegelungselements 29 ist die aktive Schaltstellung des Umschaltventils 17 fixierbar, wobei dies in einen beweglichen Teil des Umschaltventils 17 einrastet. Die aktive Schaltstellung des Umschaltventils 17 kann dadurch auch dann beibehalten werden, wenn eine Druckbeaufschlagung des Schaltanschlusses 28 beendet wird. Die passive Schaltstellung des Umschaltventils 17 liegt daher vor, wenn der Schaltanschluss 28 drucklos ist und das Verriegelungselement 29 zugleich nicht fixiert ist, da der Steuerschieber des Umschaltventils durch das Federelement 26 in der passive Schaltstellung gehalten oder in diese gebracht wird.

Mittels der Druckstromzuleitung 18 ist ein erster Arbeitsanschluss 31 des Umschaltventils 17 mit einer Druckstromquelle 30 wie einer Hydraulikpumpe verbindbar. Die Druckstromquelle 30 selbst ist dabei kein Bestandteil der Hydraulikeinheit. Die 19 ist mit einem zweiten Arbeitsanschluss 32 des Umschaltventils 17 verbunden und mündet vorzugsweise in einen Tank 37, aus welchem das rückgeleitete Fluid von der Druckstromquelle 30 erneut beziehbar ist. Der Tank 37 istebenfalls kein Bestandteil der Hydraulikeinheit. In der Fig. 1 ist die Druckstromzuleitung 18 zusätzlich mit dem Buchstaben P (für Power) und die Fluidrückleitung 19 zusätzlich mit dem Buchstaben T (für Tank) gekennzeichnet.

Die erste Hauptleitung 20 verbindet den ersten Hauptanschluss 14 des Arbeitszylinders 1 mit einem dritten und einem sechsten Arbeitsanschluss 33, 36 des Umschaltventils 17. Die zweite Hauptleitung 21 verbindet den zweiten Hauptanschluss 14 des Arbeitszylinders 1 mit einem vierten und einem fünften Arbeitsanschluss 34, 35 des Umschaltventils 17 sowie mit dem Gegenbetätigungsanschluss 25 des Steuerventils 16.

Die Verbindung des Steueranschlusses 15 des Arbeitszylinders 1 mit dem Betätigungsanschluss 24 des Steuerventils 16 sowie mit dem Schaltanschluss 28 des Umschaltzylinders 17 wird vorliegend von der Steuerleitung 22 bereitgestellt.

Überblicksartig wirken die beschriebenen Elemente wie folgt zusammen:
Mittels des Fluids aus der unter Druck stehenden Hauptleitung 20 wird der Kolben 3 des Arbeitszylinders 1 ausfahrseitig verschoben, wodurch nach dem Überfahren des zweiten Hauptanschlusses 14 durch den Kolbenring 9 im zweiten axialen Endbereich 13 bis zum Endanschlag des Kolbens 3 eine ein erhöhter, aber gedämpfter Druck im Fluid entsteht. Durch den erhöhten Druck wird Fluid über den Steue ranschluss 15 in die Steuerleitung 22, die in Verbindung mit dem Betätigungsanschluss 24 steht, weitergeleitet, wodurch der Ventilschieber des Steuerventils 16 gegen das Federelement 23 wirkt und die Umschaltung des Steuerventils 16 erfolgt. Nach erfolgter Umschaltung des Steuerventils 16 wird das Fluid mit dem erhöhten, aber gedämpften Druck über die Steuerleitung 22 bis zum Schaltanschluss 28 des Umschaltventils 17 geleitet, wo es auf den Steuerschieber des Umschaltventils 17 wirkt und die Umschaltung des Umschaltventils 17 in dessen aktive Schaltstellung bewirkt. Die Umschaltung des Umschaltventils 17 hat zur Folge, dass das Fluid aus der unter Druck stehenden Druckstromzuleitung 18 über den ersten Arbeitsanschluss 31 und den fünften Arbeitsanschluss 35 in die zweite Hauptleitung 21 geleitet wird, so dass die Hauptleitung 21 über die zweiten Hauptanschluss 14 das unter Betriebsdruck stehende Fluid in den zweiten Arbeitsraum 7 leitet, wodurch die gewünschte Umkehrung der Kolbenbewegung eingeleitet ist. Zugleich hat der Steueranschluss 15 nun keinen Einfluss mehr auf eine Umsteuerung, da der Ventilschieber des Steuerventils 16 durch die Größenverhältnisse der Stirnflächen und den gleichen Druck am zweiten Hauptanschluss 14 und dem Steueranschluss 15 in der passiven Schaltstellung gehalten wird.

Im Einzelnen gilt für das Zusammmenwirken Folgendes:
Die Hydraulikeinheit ist so ausgebildet, dass sie bei dem bestimmungsgemäßen Gebrauch drei verschiedene Betriebszustände einnehmen kann.

Fig. 1 zeigt den ersten Betriebszustand. Hierbei liegt eine Druckbeaufschlagung in der Druckstromzuleitung 18 vor, so dass das federbetriebene Verriegelungselement 29 ausfährt und an den Steuerschieber des Umschaltventils 17 anstößt, ohne dabei jedoch einzurasten. Das Steuerventil 16 befindet sich aufgrund der ausgeglichenen Druckverhältnisse an dem Betätigungsanschluss 24 und dem Gegenbetätigungsanschluss 25 in der passiven Schaltstellung. Das Umschaltventil 17 befindet sich ebenfalls in der passiven Schaltstellung, da am Schaltanschluss 28 kein Betriebsdruck anliegt. Somit kann das Fluid über die Druckstromzuleitung 18, das Umschaltventil 17 und die erste Hauptleitung 20 in den ersten Arbeitsraum 6 eingeleitet werden. Zugleich wird das Fluid über die zweite Hauptleitung 21, das Umschaltventil 17 und die Fluidrückleitung 19 aus dem zweiten Arbeitsraum 7 ausgeleitet. Der Kolben 3 bewegt sich somit in Richtung des zweiten axialen Endbereichs 13.

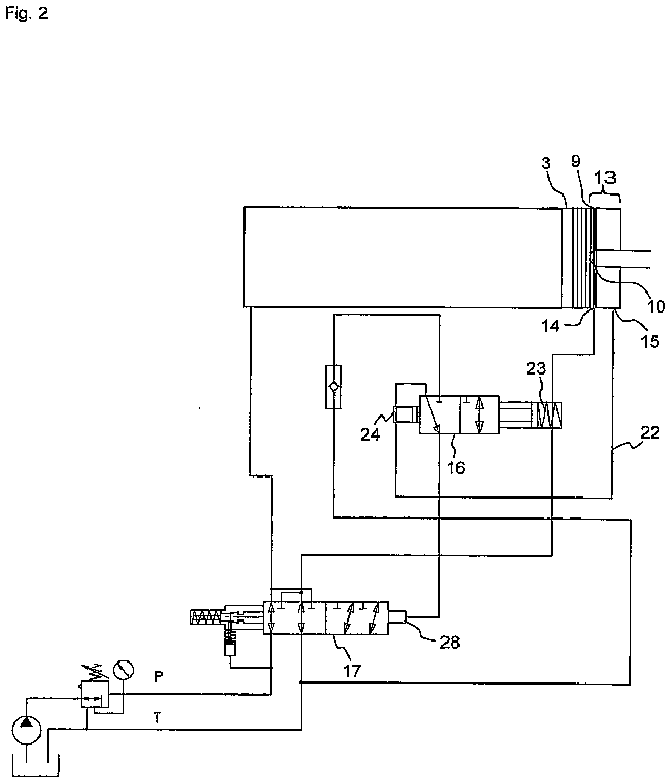

In Fig. 2 ist der zweite Betriebszustand dargestellt. Der Kolben 3 befindet sich in dem zweiten axialen Endbereich 13, wobei der zweite Hauptanschluss 14 von dem Kolbenring 9 überfahren wurde, so dass ein Teilvolumen des Fluids in dem zweiten Arbeitsraum 6 eingeschlossen ist. Dieses strömt über den Kolbenringspalt 10 gedrosselt ab. Aus der Krafteinwirkung des Kolbens 3 auf das eingeschlossene Fluids resultiert ein Überdruck an dem Steueranschluss 15, welcher mittels der Steuerleitung 22 an das Steuerventil 16 übertragen wird. Das Steuerventil 16 wird nun infolge der erhöhten Druckbeaufschlagung an dem Betätigungsanschluss 24 in die aktive Schaltstellung versetzt, wobei das Federelement 23 gespannt wird. In der aktiven Schaltstellung ermöglicht das Steuerventil 16 einen Fluiddurchtritt in Richtung des Umschaltventils 17, so dass der Schaltanschluss 28 des Umschaltventils 17 nun mit Druck aus dem Steueranschluss 15 beaufschlagt wird.

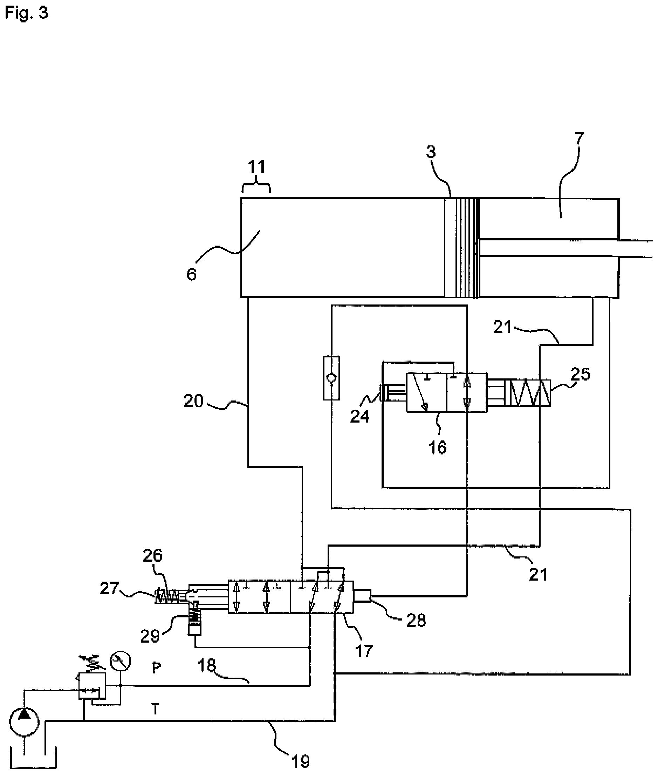

Fig. 3 stellt den dritten Betriebszustand dar. Infolge der Druckbeaufschlagung des Schaltanschlusses 28 geht das Umschaltventil 17 in die aktive Schaltstellung über. In der aktiven Schaltstellung wird das Fluid mittels der Druckstromzuleitung 18 über das Umschaltventil 17 und die zweite Hauptleitung 21 über den zweiten Hauptanschluss in den zweiten Arbeitsraum 7 eingeleitet. Zugleich ist ein Fluidabstrom aus dem ersten Arbeitsraum 6 über die erste Hauptleitung 20 und das Umschaltventil 17 in die Fluidrückleitung 19 einleitbar.

Somit wird eine gedämpfte Bewegungsumkehr des Kolbens 3 bewirkt, woraufhin sich dieser erneut in Richtung des ersten axialen Endbereichs 11 bewegt. Der dritte Betriebszustand bleibt während dieser Kolbenbewegung bestehen. Wie Fig. 3 zu entnehmen ist, geht das Steuerventil 16 nach der erfolgten Bewegungsumkehr aufgrund der ausgeglichenen Druckverhältnisse an dem Betätigungsanschluss 24 und dem Gegenbetätigungsanschluss 25 erneut in die passive Schaltstellung über, so dass der Schaltanschluss 28 des Umschaltventils 17 drucklos ist. Die aktive Schaltstellung des Umschaltventils 17 wird dennoch beibehalten, da das Verriegelungselement 29 bei der Änderung der Schaltstellung in den Steuerschieber des Umschaltventils 17 einrastet und die aktive Schaltstellung fixiert, solange eine Druckbeaufschlagung in der Druckstromzuleitung 18 vorliegt. Fällt der Systemdruck in der Druckstromzuleitung 18 ab, so wird das im Verriegelungsanschluss 27 vorhandene Federelement 26 entspannt. Das Verriegelungelement 29 verlässt seine eingerastete Position und gibt den Steuerschieber frei. Damit geht das Umschaltventil 17, angetrieben durch das Federelement 26 erneut in die passive Schaltstellung über. Das dabei zurückgedrängte Fluid am Schaltanschluss 28 wird im Ausführungsbeispiel über den Abschnitt der Steuerleitung 22 zwischen Schaltanschluss 28 und Steuerventil 16 sowie dann über eine Rückleitung mit einem Rückschlagventil (ohne Bezugszeichen) abgeleitet und in die Fluidrückleitung 19 eingeleitet.

### Verwendete Bezugszeichen

- 1: Arbeitszylinder
- 2: hydraulische Steuerungseinheit
- 3: Kolben
- 4: Kolbenstange
- 5: Zylinderrohr
- 6: erster Arbeitsraum
- 7: zweiter Arbeitsraum
- 8: Dichtung
- 9: Kolbenring
- 10: Kolbenringspalt
- 11: erster axialer Endbereich
- 12: erster Hauptanschluss
- 13: zweiter axialer Endbereich
- 14: zweiter Hauptanschluss
- 15: Steueranschluss
- 16: Steuerventil
- 17: Umschaltventil
- 18: Druckstromzuleitung
- 19 20: erste Hauptleitung
- 21: zweite Hauptleitung
- 22: Steuerleitung
- 23: Federelement
- 24: Betätigungsanschluss
- 25: Gegenbetätigungsanschluss
- 26: Federelement
- 27: Verriegelungsanschluss
- 28: Schaltanschluss
- 29: Verriegelungselement
- 30: Druckstromquelle
- 31: erster Arbeitsanschluss
- 32: zweiter Arbeitsanschluss
- 33: dritter Arbeitsanschluss
- 34: vierter Arbeitsanschluss
- 35: fünfter Arbeitsanschluss
- 36: sechster Arbeitsanschluss
- 37: Tank

## Patentansprüche

1. Hydraulikeinheit für einen Drehpflug,
aufweisend einen doppelt wirkenden Arbeitszylinder (1) und eine hydraulische Steuerungseinheit (2),
wobei der Arbeitszylinder einen Kolben (3), eine Kolbenstange (4) sowie ein Zylinderrohr (5) aufweist, wobei der Arbeitszylinder (1) einen ersten und einen zweiten Arbeitsraum (6; 7) aufweist,
wobei der Kolben (3) eine radial umlaufende Dichtung (8) sowie zumindest einen Kolbenring (9) mit einem Kolbenringspalt (10) aufweist, wobei der Kolbenring (9) von der Dichtung (8) axial in Richtung des zweiten Arbeitsraums (7) beabstandet angeordnet ist,
wobei der Arbeitszylinder (1) in einem ersten axialen Endbereich (11) einen ersten Hauptanschluss (12) und in einem zweiten axialen Endbereich (13) einen zweiten Hauptanschluss (14) sowie einen Steueranschluss (15) aufweist und wobei über die Hauptanschlüsse (12; 14) ein Fluid in die Arbeitsräume (6; 7) ein- und ausleitbar ist,
wobei in dem zweiten Arbeitsraum (7) bei einem Überfahren des zweiten Hauptanschlusses (14) von dem Kolbenring (9) ein Teilvolumen des Fluids eingeschlossen ist, welches über den Kolbenringspalt (10) gedrosselt abströmbar ist,
wobei die hydraulische Steuerungseinheit (2) ein hydraulisch betätigtes Steuerventil (16), ein hydraulisch betätigtes Umschaltventil (17), eine Druckstromzuleitung (18), eine Fluidrückleitung (19), eine erste und zweite Hauptleitung (20; 21) sowie eine Steuerleitung (22) aufweist,
wobei das Steuerventil (16) eine passive und eine aktive Schaltstellung aufweist, wobei das Steuerventil (16) ein Federelement (23) aufweist, das in der passiven Schaltstellung entspannt und in der aktiven Schaltstellung gespannt ist, wobei das Steuerventil (16) einen Betätigungsanschluss (24) und einen Gegenbetätigungsanschluss (25) aufweist, wobei bei einer gleichen Druckbeaufschlagung an dem Betätigungsanschluss (24) und an dem Gegenbetätigungsanschluss (25) die passive Schaltstellung eingenommen wird und wobei bei einer Druckbeaufschlagung mit einem höheren Druck an dem Betätigungsanschluss (24) die aktive Schaltstellung eingenommen wird,
wobei das Umschaltventil (17) eine aktive und eine passive Schaltstellung aufweist, wobei das Umschaltventil (17) ein Federelement (26) aufweist, das in der passiven Schaltstellung entspannt und in der aktiven Schaltstellung gespannt ist, wobei das Umschaltventil (17) einen Verriegelungsanschluss (27) und einen Schaltanschluss (28) aufweist, wobei die aktive Schaltstellung durch eine Druckbeaufschlagung des Schaltanschlusses (28) einnehmbar ist, wobei das Umschaltventil (17) ein hydraulisch betätigbares Verriegelungselement (29) aufweist, mittels welchem die aktive Schaltstellung fixierbar ist, wobei das Verriegelungselement (29) dem Verriegelungsanschluss (27) zugeordnet ist und mittels einer Druckbeaufschlagung des Verriegelungsanschlusses (27) betätigbar ist, wobei die passive Schaltstellung einnehmbar ist, wenn der Schaltanschluss (28) drucklos und das Verriegelungselement (29) nicht fixiert ist,
wobei die Druckstromzuleitung (18) mit einem ersten Arbeitsanschluss (31) des Umschaltventils (17) verbunden ist und mit einer Druckstromquelle (30) verbindbar ist,
wobei die (19) mit einem zweiten Arbeitsanschluss (32) des Umschaltventils (17) verbunden ist,
wobei die erste Hauptleitung (20) den ersten Hauptanschluss (12) des Arbeitszylinders (1) mit einem dritten und einem sechsten Arbeitsanschluss (33; 36) des Umschaltventils (17) verbindet,
wobei die zweite Hauptleitung (21) den zweiten Hauptanschluss (14) des Arbeitszylinders (1) mit einem vierten und einem fünften Arbeitsanschluss (34; 35) des Umschaltventils (17) und dem Gegenbetätigungsanschluss (25) des Steuerventils (16) verbindet,
wobei die Steuerleitung (22) den Steueranschluss (15) des Arbeitszylinders (1) mit dem Betätigungsanschluss (24) des Steuerventils (16) und dem Schaltanschluss (28) des Umschaltventils (17) verbindet und bei der aktiven Schaltstellung des Steuerventils (16) geöffnet und bei der passiven Schaltstellung des Steuerventils (16) geschlossen ist,
wobei bei einer Druckbeaufschlagung an der Druckstromzuleitung (18) ein Fluidstrom über das Umschaltventil (17) und die erste Hauptleitung (20) in den ersten Arbeitsraum (6) einleitbar ist und ein Fluidabstrom aus dem zweiten Arbeitsraum (7) über die zweite Hauptleitung (21) und das Umschaltventil (17) in die Fluidrückleitung (19) einleitbar ist,
wobei bei einem Überfahren des zweiten Hauptanschlusses (14) von dem Kolbenring (9) ein Überdruck an dem Steueranschluss (15) mittels der Steuerleitung (22) an das Steuerventil (16) übertragbar ist und dieses in eine aktive Schaltstellung versetzbar ist und über das Steuerventil (16) der Schaltanschluss (28) des Umschaltventils (17) mit einem Druck beaufschlagbar ist und von dem Umschaltventil (17) eine aktive Schaltstellung einnehmbar ist und in der aktiven Schaltstellung ein Druckstrom aus der Druckstromzuleitung (18) über das Umschaltventil (17) und die zweite Hauptleitung (21) in den zweiten Arbeitsraum (7) einleitbar und ein Fluidabstrom aus dem ersten Arbeitsraum (6) über die erste Hauptleitung (20) und das Umschaltventil (17) in die Fluidrückleitung (19) einleitbar ist.

2. Hydraulikeinheit für einen Drehpflug nach Anspruch 1,
**dadurch gekennzeichnet,**
**dass** der Kolben (3) einen weiteren Kolbenring (9) mit einem weiteren Kolbenringspalt (10) aufweist, wobei der weitere Kolbenring (9) von der Dichtung (8) axial in Richtung des ersten Arbeitsraums (6) beabstandet angeordnet ist und wobei in dem ersten Arbeitsraum (6) bei einem Überfahren des ersten Hauptanschlusses (12) von dem weiteren Kolbenring ein weiteres Teilvolumen des Fluids eingeschlossen ist, welches über den weiteren Kolbenringspalt gedrosselt abströmbar ist.

## Claims

1. A hydraulic system for a reversible plough,
comprising a double-acting working cylinder (1) and a hydraulic control unit (2),
wherein the working cylinder includes a piston (3), a piston rod (4) and a cylinder tube (5), wherein the working cylinder (1) includes a first and a second working chamber (6; 7),
wherein the piston (3) has a radially circumferential seal (8) and at least one piston ring (9) with a piston ring gap (10), wherein the piston ring (9) is axially spaced from the seal (8) towards the second working chamber (7),
wherein the working cylinder (1) has a first main connection (12) in a first axial end region (11) and a second main connection (14) and a control connection (15) in a second axial end region (13), and wherein a fluid can be introduced into and discharged from the working chambers (6; 7) via the main connections (12; 14),
wherein a partial volume of the fluid is enclosed in the second working chamber (7) when the piston ring (9) passes over the second main connection (14), and said partial volume can be discharged in a throttled manner via the piston ring gap (10),
wherein the hydraulic control unit (2) comprises a hydraulically actuated control valve (16), a hydraulically actuated switchover valve (17), a pressure flow supply line (18), a fluid return line (19), a first and a second main line (20; 21), and a control line (22),
wherein the control valve (16) has a passive and an active switching position, wherein the control valve (16) comprises a spring element (23) which is relaxed in the passive switching position and tensioned in the active switching position, wherein the control valve (16) comprises an actuation connection (24) and a counter-actuation connection (25), wherein the passive switching position is assumed when the same pressure is applied to the actuation connection (24) and to the counter-actuation connection (25), and wherein the active switching position is assumed when a higher pressure is applied to the actuation connection (24),
wherein the switchover valve (17) has an active and a passive switching position, wherein the switchover valve (17) comprises a spring element (26) which is relaxed in the passive switching position and tensioned in the active switching position, wherein the switchover valve (17) comprises a locking connection (27) and a switching connection (28), wherein the active switching position can be assumed when pressure is applied to the switching connection (28), wherein the switchover valve (17) has a locking element (29) which can be hydraulically actuated and by means of which the active switching position can be fixed, wherein the locking element (29) is assigned to the locking connection (27) and can be actuated by means of pressurization of the locking connection (27), wherein the passive switching position can be assumed when the switching connection (28) is depressurized and the locking element (29) is not fixed,
wherein the pressure flow supply line (18) is connected to a first working connection (31) of the switchover valve (17) and is connectable to a pressure flow source (30),
wherein the fluid return line (19) is connected to a second working connection (32) of the changeover valve (17),
wherein the first main line (20) connects the first main connection (12) of the working cylinder (1) to a third and a sixth working connection (33; 36) of the changeover valve (17),
wherein the fluid return line (19) is connected to a second working connection (32) of the switchover valve (17),
wherein the first main line (20) connects the first main connection (12) of the working cylinder (1) to a third and a sixth working connection (33; 36) of the switchover valve (17),
wherein the second main line (21) connects the second main connection (14) of the working cylinder (1) to a fourth and a fifth working connection (34; 35) of the switchover valve (17) and to the counter-actuation connection (25) of the control valve (16),
wherein the control line (22) connects the control connection (15) of the working cylinder (1) to the actuation connection (24) of the control valve (16) and to the switching connection (28) of the switchover valve (17) and is open when the control valve (16) is in the active switching position and is closed when the control valve (16) is in the passive switching position,
wherein, when pressure is applied to the pressure flow supply line (18), a fluid flow can be introduced into the first working chamber (6) via the switchover valve (17) and the first main line (20), and a fluid outflow from the second working chamber (7) can be introduced into the fluid return line (19) via the second main line (21) and the switchover valve (17),
wherein, when the piston ring (9) passes over the second main connection (14), an overpressure at the control connection (15) can be transmitted via the control line (22) to the control valve (16) which can be set to an active switching position, and pressure can be applied to the switching connection (28) of the switchover valve (17) via the control valve (16), and the switchover valve (17) can assume an active switching position, and in the active switching position a pressure flow from the pressure flow line (18) can be introduced into the second working chamber (7) via the switchover valve (17) and the second main line (21), and a fluid outflow from the first working chamber (6) can be introduced into the fluid return line (19) via the first main line (20) and the changeover valve (17).

2. The hydraulic unit for a reversible plough according to claim 1, **characterized in**
**that** the piston (3) comprises a further piston ring (9) with a further piston ring gap (10), wherein the further piston ring (9) is axially spaced from the seal (8) towards the first working chamber (6), and wherein a further partial volume of the fluid is enclosed in the first working chamber (6) when the further piston ring passes over the first main connection (12), and said partial volume can be discharged in a throttled manner via the further piston ring gap.

## Revendications

1. Unité hydraulique d'une charrue réversible,
présentant un vérin de travail (1) à double effet et une unité de commande hydraulique (2),
le vérin de travail présentant un piston (3), une tige à piston (4) ainsi qu'un tube cylindrique (5), le vérin de travail (1) présentant un premier et un deuxième espace de travail (6; 7),
le piston (3) présentant un joint périphérique radial (8) ainsi qu'au moins un segment de piston (9) pourvu d'une fente de segment de piston (10), le segment de piston (9) étant disposé à distance axiale du joint (8) dans la direction du deuxième espace de travail (7),
dans lequel le vérin de travail (1) présente un premier raccord principal (14) et un premier raccord de commande (12) dans une première zone d'extrémité axiale (11) et un deuxième raccord principal (14) et un raccord de commande (15) dans une deuxième zone d'extrémité axiale (13), et dans lequel un fluide peut être introduit dans les espaces de travail (6; 7) et évacué de celles-ci par les raccords principaux (12, 14),
dans lequel un volume partiel du fluide est contenu dans le deuxième espace de travail (7) lorsque le segment de piston (9) passe sur le deuxième raccord principal (14), lequel volume partiel peut être évacué de manière étranglée par la fente de segment de piston (10),
dans lequel l'unité de commande hydraulique (2) comprend une vanne de commande à actionnement hydraulique (16), une vanne d'inversion à actionnement hydraulique (17), une ligne d'alimentation en pression (18), une ligne de retour de fluide (19), une première et une deuxième ligne principale (20; 21) et une ligne de commande (22),
dans lequel la vanne de commande (16) présente une position de commutation passive et une position de commutation active, dans lequel la vanne de commande (16) présente un élément à ressort (23) qui est détendu dans la position de commutation passive et tendu dans la position de commutation active, dans lequel la vanne de commande (16) présente un raccord d'actionnement (24) et un raccord d'actionnement à contre-courant (25), dans lequel la position de commutation passive étant prise lorsque la même pression est appliquée au raccord d'actionnement (24) et au raccord d'actionnement à contre-courant (25), et la position de commutation active étant prise lorsqu'une pression plus élevée est appliquée au raccord d'actionnement (24),
dans lequel la vanne d'inversion (17) présente une position de commutation passive et une position de commutation active, dans lequel la vanne d'inversion (17) présente un élément à ressort (26) qui est détendu dans la position de commutation passive et tendu dans la position de commutation active, dans lequel la vanne d'inversion (17) présente un raccord de verrouillage (27) et un raccord d'actionnement (28), dans lequel la position de commutation active peut être prise lors de l'application d'une pression au raccord d'actionnement (28), dans lequel la vanne d'inversion (17) présente un élément de verrouillage à actionnement hydraulique (29), au moyen duquel la position de commutation active peut être fixée, dans lequel l'élément de verrouillage (29) est assigné au raccord de verrouillage (27) et peut être actionné par l'application d'une pression au raccord der verrouillage (27), dans lequel la position de commutation passive doit être prise lorsque le raccord d'actionnement (28) est dépressurisé et que l'élément de verrouillage (29) n'est pas fixé,
dans lequel la conduite d'alimentation en pression (18) est reliée à un premier raccord de travail (31) de la vanne d'inversion (17) et peut être reliée à une source de débit sous pression (30),
dans lequel la ligne de retour du fluide (19) est connectée à un second raccord de travail (32) de la vanne d'inversion (17),
la première ligne principale (20) reliant le premier raccord principal (12) du vérin de travail (1) à un troisième et un sixième raccord de travail (33; 36) de la vanne d'inversion (17),
la deuxième ligne principale (21) reliant le deuxième raccord principal (14) du vérin de travail (1) à un quatrième et un cinquième raccord de travail (34; 35) de la vanne d'inversion (17) et au raccord d'actionnement à contre-courant (25) de la vanne de commande (16),
dans lequel la première ligne de commande (22) relie le premier raccord de commande (15) du vérin de travail (1) au raccord d'actionnement (24) de la vanne de commande (16) et au raccord d'actionnement (28) de la vanne d'inversion (17) et est ouverte lorsque la vanne de commande (16) est dans la position de commutation active et est fermée lorsque la vanne de commande (16) est dans la position de commutation passive,
dans lequel, lorsqu'une pression est appliquée à la ligne d'alimentation en pression (18), un courant de fluide peut être introduit dans le premier espace de travail (6) par la vanne d'inversion (17) et la première ligne principale (20), et un écoulement de fluide du deuxième espace de travail (7) peut être introduit dans la ligne de retour de fluide (19) par la deuxième ligne principale (21) et la vanne d'inversion (17),
dans lequel, lorsque le segment de piston (9) passe sur le deuxième raccord principal (14), une surpression au niveau du raccord de commande (15) peut être transmise au moyen de la ligne de commande (22) à la vanne de commande (16) et celle-ci peut être placée dans un état de commutation actif, et le raccord d'actionnement (28) de la vanne d'inversion (17) peut être alimenté en pression par l'intermédiaire de la vanne de commande (16) et une deuxième position de commutation peut être prise par la vanne d'inversion (17) et, dans la deuxième position de commutation, un courant sous pression peut être conduit de la conduite d'alimentation en pression (18) par la vanne d'inversion (17) et la deuxième ligne principale (21) dans le deuxième espace de travail (7) et un écoulement de fluide peut être introduit du premier espace de travail (6) par la premier ligne principale (20) et la vanne d'inversion (17) dans la ligne de retour du fluide (19).

2. Unité hydraulique d'une charrue réversible selon la revendication 1 est **caractérisée en ce**
**que** le piston (3) présente un autre segment de piston (9) étant pourvu d'un autre fente de segment de piston (10), l'autre segment de piston (9) étant disposé à distance axiale du joint (8) dans la direction du premier espace de travail (6) et dans lequel un volume partiel du fluide est contenu dans le premier espace de travail (6) lorsque l'autre segment de piston (9) passe sur le premier raccord principal (12), lequel volume partiel peut être évacué de manière étranglée par l'autre fente de segment de piston.
